# EUROPEAN PATENT SPECIFICATION

(11) **EP 2 500 246 B1**
(45) Date of publication and mention of the grant of the patent: **19.09.2018**
(21) Application number: 12001731.4
(22) Date of filing: 14.03.2012
(51) Int. Cl.: B62H 5/00, B62J 9/00, E05B 9/04

(54) **Anti-theft device for closing and locking a case on a support of a motorcycle**
Diebstahlschutzvorrichtung zum Schließen und Zuschließen einer Kiste eines Motorrads
Dispositif antivol pour fermer et verrouiller une mallette sur le porte-bagages d'une motocyclette

(30) Priority: 15.03.2011 TW 10108750
(43) Date of publication of application: 19.09.2012
(73) Proprietor: Kuan Mei Plastic Co., Ltd., Tainan City (TW)
(72) Inventor: Chung, Vincent, Tainan City (TW)
(74) Representative: Zeitler Volpert Kandlbinder Patent- und Rechtsanwälte Partnerschaft mbB

(56) References cited:
- WO-A1-01/12496
- WO-A1-2007/131954
- CN-Y- 2 672 227
- US-A- 6 062 053

## Description

This invention relates to a detachable case for a motorcycle, more particularly to an anti-theft device for closing and locking a case on a support of a motorcycle.

In a transport case for a motorcycle as disclosed in EP 1 065 139 B1, which shows the preamble of claim 1, a first release control element is arranged on a lid part of the transport case such that, in a closed state of the transport case, the first release control element provided on the lid part is operable to act on a movable release member so as to release a latch mechanism that is provided in a base part of the transport case to catch a fitting extension of the motorcycle. In addition, a second release control element is arranged to be operable to release a retaining mechanism that is arranged to retain the lid part to the base part in the closed state. When it is desired to detach the transport case from the motorcycle and open the lid part of the transport case, successive operations of the first and second release control elements are required, which is inconvenient.

An object of the present invention is to provide an anti-theft device which is operable conveniently.

According to this invention, the anti-theft device includes a case releasably retaining member adapted to be mounted on a shell of a case and operable to longitudinally displace between a retaining position to retainingly engage a first retained portion on a support, and a releasing position to permit disengagement of the case releasably retaining member from the first retained portion. A lock housing includes a tubular mount adapted to be mounted on one of the counter-shell and the shell, a base wall with a periphery surrounding a rotary axis, and a surrounding wall extending from the periphery toward the tubular mount to cooperate with the base wall to define an accommodation chamber therein. The base wall has a penetrating hole extending therethrough along the rotary axis. A key-operated lock is received in the tubular mount, and includes a lock shaft which extends into the accommodation chamber to form a bolt region, and which further extends outwardly of the penetrating hole to terminate at a spindle end that is disposed to enable either a movement of the case releasably retaining member to the releasing position, or a movement of the case to the open position. The lock shaft is turnable relative to the base wall about the rotary axis between a latched position, where the bolt region is guarded against a longitudinal movement thereof along the rotary axis relative to the base wall, and an unlatched position, where the bolt region is set free to permit the longitudinal movement of the spindle end from a non-actuating position to an actuating position, where the spindle end is coupled to enable a corresponding one of the movements . A latch member has a latch segment extending into the accommodation chamber to be angularly movable with the lock shaft about the rotary axis, and an abutting segment disposed to be abuttingly engaged with either a second retained portion on the shell or the case releasably retaining member when the lock shaft is in the latched position.

Other features and advantages of the present invention will become apparent in the following detailed description of the preferred embodiments of the invention, with reference to the accompanying drawings, in which:
Fig. 1 is a sectional view of the first preferred embodiment of an anti-theft device according to this invention incorporated in a case;
Fig. 2 is a perspective view of the first preferred embodiment incorporated in the case;
Fig. 3 is a sectional view of the first preferred embodiment when the case in a closed and locked state;
Fig. 4 is an exploded perspective view of a lock unit of the first preferred embodiment;
Fig. 5 is a schematic view showing the case in the closed and locked state;
Fig. 6 is a schematic view similar to Fig. 5, showing a latch member in an unlocking and retaining position;
Fig. 7 is a sectional view similar to Fig. 3 when the case in a closed and unlocked state;
Fig. 8 is a schematic view similar to Fig. 5, showing the latch member in an unlocking and releasing position;
Fig. 9 is a perspective view of the second preferred embodiment of an anti-theft device according to this invention incorporated in a case;
Fig. 10 is a perspective view of the second preferred embodiment;
Fig. 11 is a perspective view of the second preferred embodiment taken from another angle; and
Fig. 12 is a side view of the second preferred embodiment.

Before the present invention is described in greater detail, it should be noted that same reference numerals have been used to denote like elements throughout the specification.

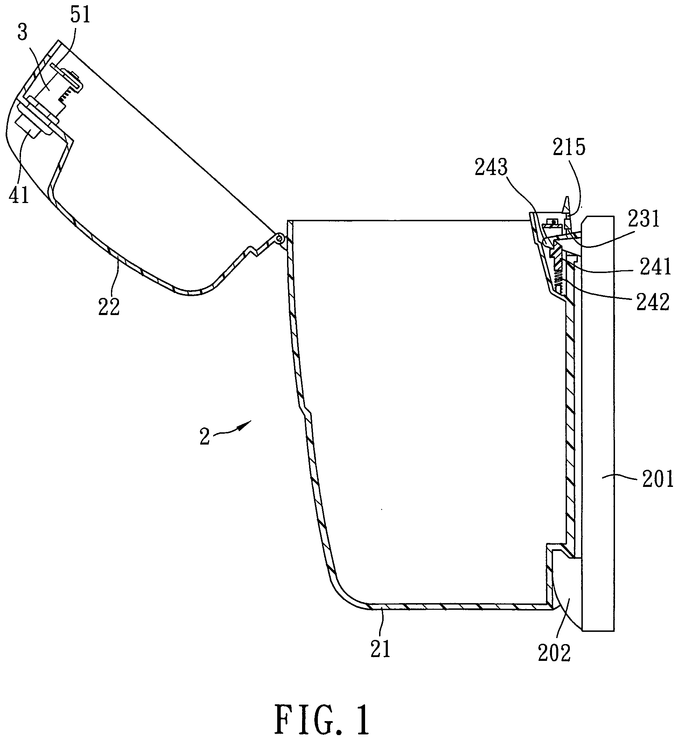

Referring to Figs. 1 to 3, the first preferred embodiment of an anti-theft device according to the present invention is shown to be mounted on a case 2 for closing and locking the case 2 on a support 201 of a motorcycle . The case 2 includes a shell 21 and a counter-shell 22 hingedly connected to the shell 21 such that the case 2 is moveable between open and closed positions. The support 201 of the motorcycle has two hooks 202 (only one is shown in Fig. 1), a first retained portion 243 in the form of a hook-shaped extension fitting 243 disposed above the hooks 202. The shell 21 has a second retained portion 231 in the form of a slot 231. The anti-theft device according to this embodiment comprises a case releasably retaining member 241, a lock housing 3, a lock unit 4, a latch unit 5

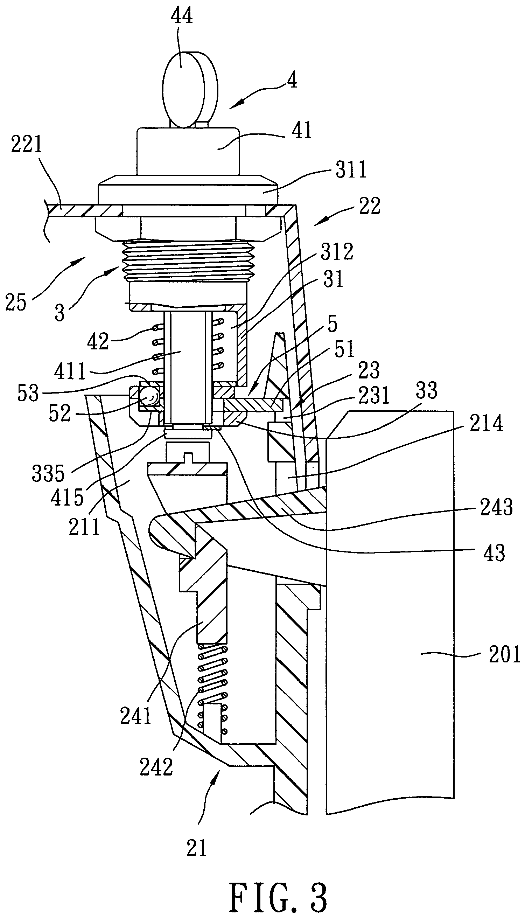

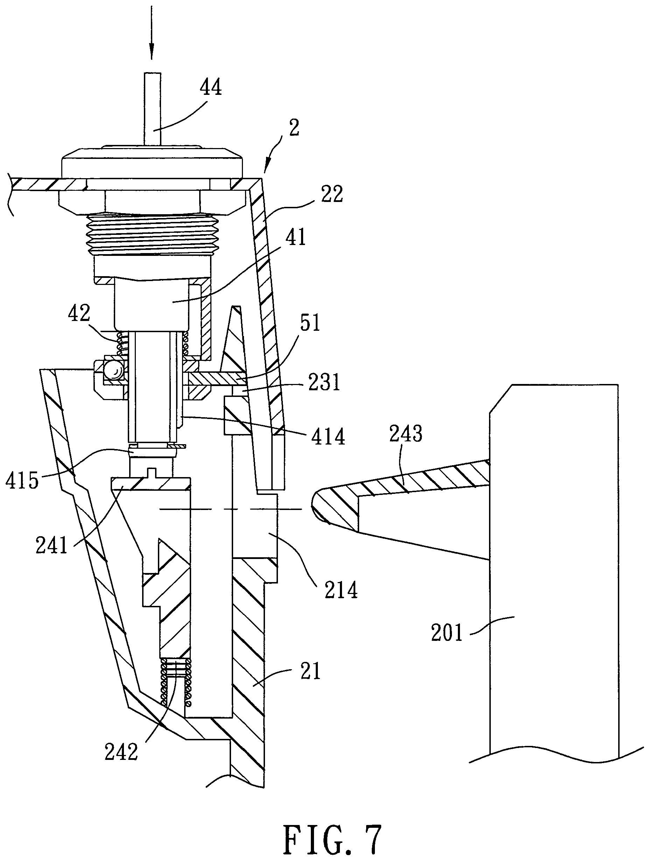

The case releasably retaining member 241 is mounted in a chamber 211 of the shell 21, and is operable to displace in a longitudinal direction between a retaining position (see Fig. 3), where the extension fitting 243 is inserted into the chamber 211 through a hole 214 in the shell 21 and is retainingly engaged with the case releasably retaining member 241 so as to retain the case 2 on the support 201, and a releasing position to permit disengagement of the case releasably retaining member 241 from the extension fitting 243 to allow the case 2 to be removed from the support 201, as shown in Fig. 7. A biasing spring 242 is disposed to bias the case releasably retaining member 241 to the retaining position.

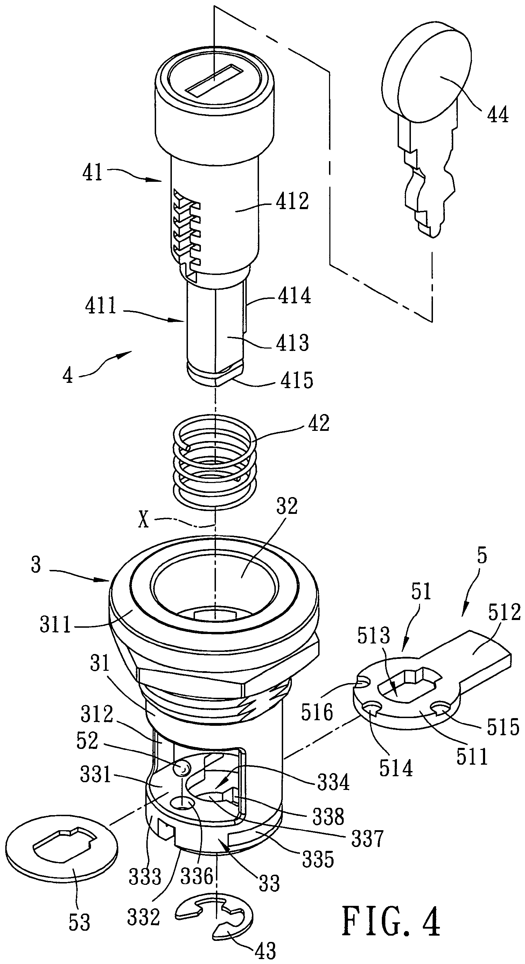

Referring to Figs. 3 to 5, the lock housing 3 includes a tubular mount 311 which is mounted on a mount wall 221 of the counter-shell 22, a base wall 33 opposite to the tubular mount 311 in the longitudinal direction, and having a periphery 333 which surrounds a rotary axis (X) oriented in the longitudinal direction, and a surrounding wall 31 extending from the periphery 333 to the tubular mount 311 to cooperate with the base wall 33 to define an accommodation chamber 32 therein. The base wall 33 has a penetrating hole 334 which extends therethrough along the rotary axis (X) and which includes a circular region 337 and a radially extending region 338, a receiving slot 335 which extends from the periphery 333 to communicate with the penetrating hole 334, and a ball receiving hole 336 which is formed in an upper surface 331 thereof. A cutout 312 is formed in the surrounding wall 31.

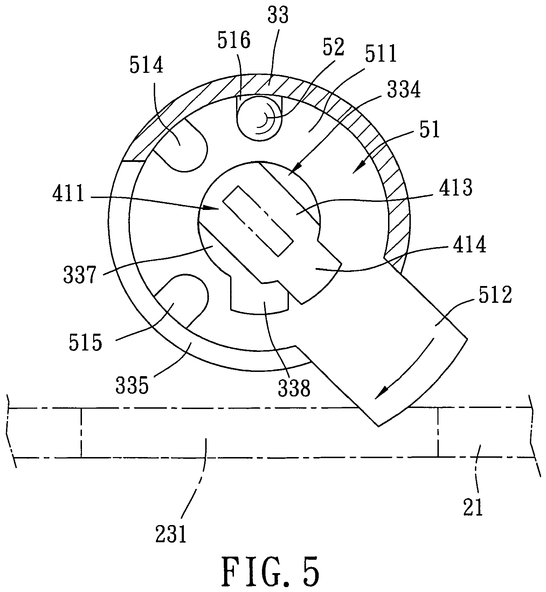

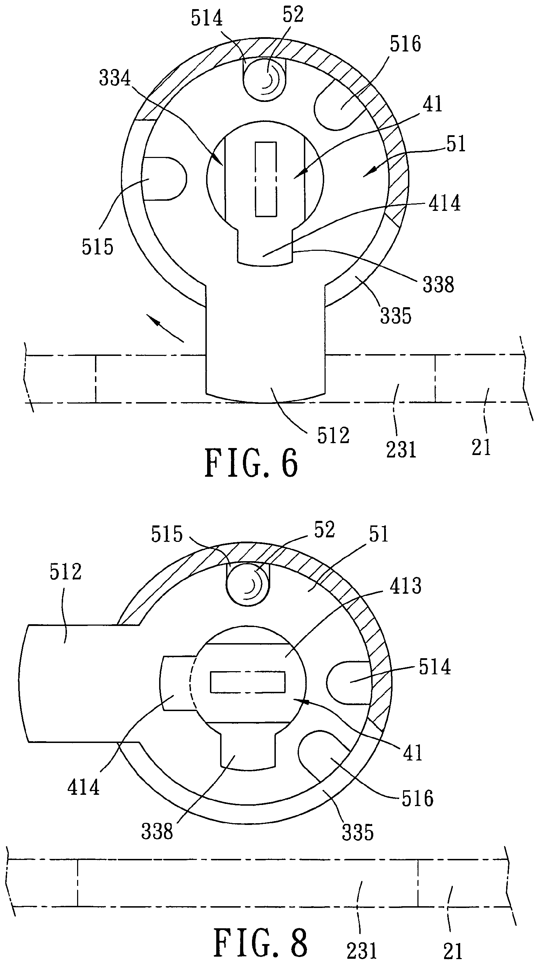

The lock unit 4 includes a key-operated lock 41, a biasing member 42, and a snap clip 43. The key-operated lock 41 is received in the tubular mount 311, and includes a mounting portion 412 and a lock shaft 411 which extends into the accommodation chamber 32 to form a bolt region, and which further extends outwardly of the penetrating hole 334 to terminate at a spindle end 415. Since the mounting portion 412 is of a known type, detailed description on it is dispensed with herein. The bolt region has a bolt portion 413 with a non-circular cross-section, and a radial extension 414 configured to be fitted in the radially extending region 338. With this configuration and the turnability of the lock shaft 411, the lock shaft 411 is permitted to angularly move relative to the base wall 33 about the rotary axis (X) between a latched position, as shown in Fig. 5, where the radial extension 414 is not registered with the radially extending region 338 so as to guard the bolt region against a longitudinal movement thereof along the rotary axis (X) relative to the base wall 33, and an unlatched position, as shown in Fig. 6, where the radial extension 414 is registered with the radially extending region 338 so that the bolt region is set free to permit the longitudinal movement of the spindle end 415 from a non-actuating position (an upper position) to an actuating position (a lower position), thereby pressing the case releasably retaining member 241 to the releasing position. The biasing member 42 is sleeved on the lock shaft 411 to bias the spindle end 415 upwardly to the non-actuating position. The snap clip 43 is configured to snappingly clip on a neck region of the spindle end 415 such that, when the spindle end 415 is biased in the non-actuating position, said snap clip 43 abuts against and is retained by a lower surface 332 of the base wall 33, thereby limiting the extent of displacement of the spindle end 415.

The latch unit 5 includes a latch member 51, a ball 52, and a pressing plate 53. The latch member 51 has a latch segment 511 and an abutting segment 512 opposite to each other in a lengthwise direction. The latch segment 511 is inserted into the receiving slot 335 to extend radially relative to the rotary axis (X) into the accommodation chamber 32, and has a spline hole 513 configured to be in spline engagement with the bolt region so as to be angularly movable with the lock shaft 411 about the rotary axis (X), and to permit the longitudinal movement of the lock shaft 411 relative to the latch segment 511, and a plurality of grooves 514, 515, 516 angularly displaced from each other about the rotary axis (X). The abutting segment 512 is disposed to be abuttingly engaged with the slot 231 when the lock shaft 411 is in the latched position (see Fig. 3). The ball 52 is disposed to be engaged with a selected one of the grooves 514, 515, 516 to hold the latch segment 511 against movement relative to the base wall 33 when the lock shaft 411 is in a corresponding one of the latched and unlatched positions. The pressing plate 53 is inserted into the accommodation chamber 32 to be urged by the biasing member 42 toward the upper surface 331 so as to hold down the ball 52 in a selected one of the grooves 514, 515, 516 during the angular movement of the latch segment 511.

As shown in Figs. 3 and 5, when the case 2 is in a closed and locked state, the abutting segment 512 is abuttingly engaged with the slot 231 while the radial extension 414 is not registered with the radially extending region 338, i.e., the lock shaft 411 is in the latched position. In this state, the bolt region is guarded against the longitudinal movement so as to prevent the displacement of the case releasably retaining member 241 to the releasing position. Meanwhile, the ball 52 is retained in the groove 516.

With reference to Figs. 5 to 7, when it is desired to remove the case 2 from the support 201, a key 44 is operated to turn the lock 41 in a clockwise direction about approximately 45 degrees until the ball 52 is engaged in the groove 514. In this stage, the abutting segment 512 is still engaged in the slot 231 to hold the case 2 in the closed position, while the radial extension 414 is brought to register with the radially extending region 338 so as to place the lock shaft in the unlatched position. Since the spindle end 415 confronts the case releasably retaining member 241 along the rotary axis (X), by pressing of the lock body 41, the spindle end 415 is moved to the actuating position to displace the case releasably retaining member 241 to the releasing position. Thus, the case 2 can be removed from the support 201.

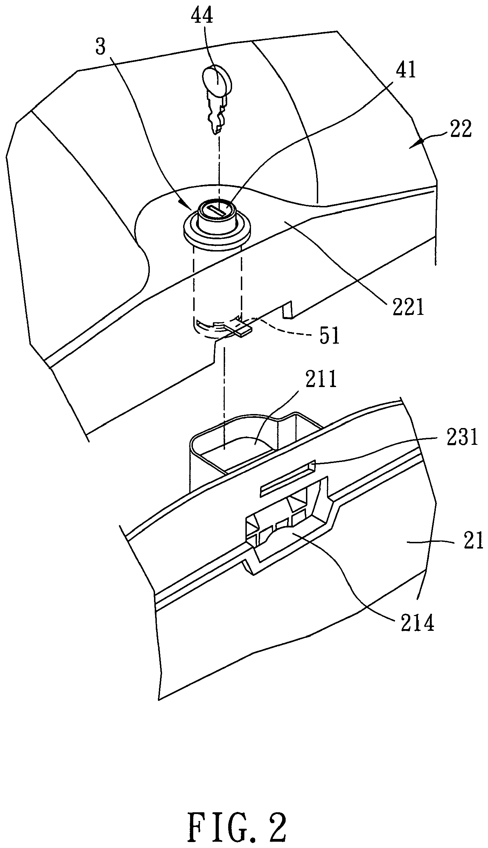

With reference to Figs. 2, 6 and 8, when it is desired to open the case 2, the key 44 is operated to further turn the lock 41 in the clockwise direction about approximately 90 degrees to displace the ball 52 into engagement in the groove 515 against the biasing action of the biasing member 42. As a result, the abutting segment 512 is disengaged from the slot 231 so as to allow opening of the case 2. In design, the lock 41 may be operated to move straightly from the state shown in Fig. 5 to the state shown in Fig. 8 for opening the case 2.

As mentioned above, in the first embodiment, the user can operate the key 44 to rotate the lock 41 between the latched and unlatched positions, and to press the lock 41 between the non-actuating and actuating positions for moving the case releasably retaining member 241 between the retaining and releasing positions. Opening and unlocking of the case 2 on the support 201 is convenient to perform.

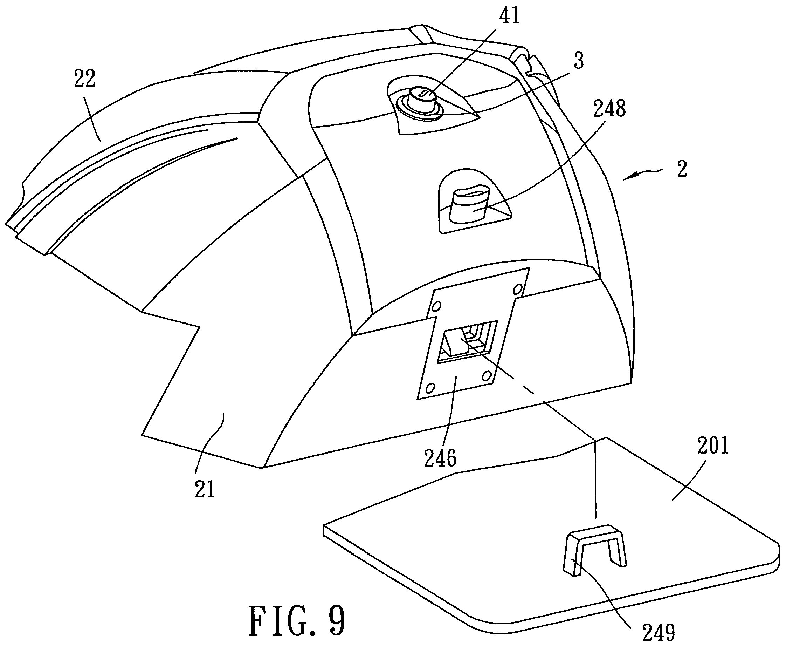

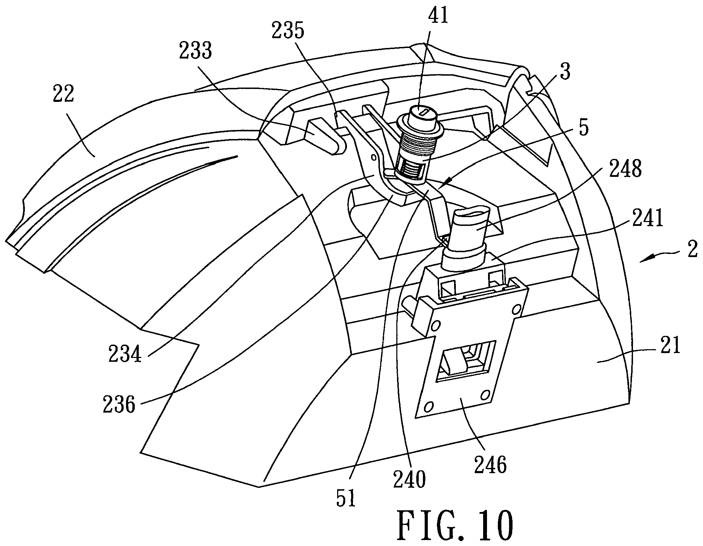

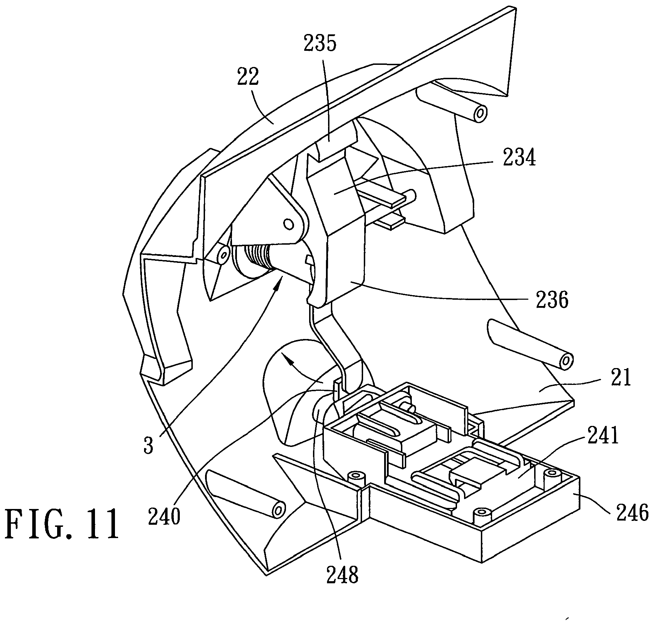

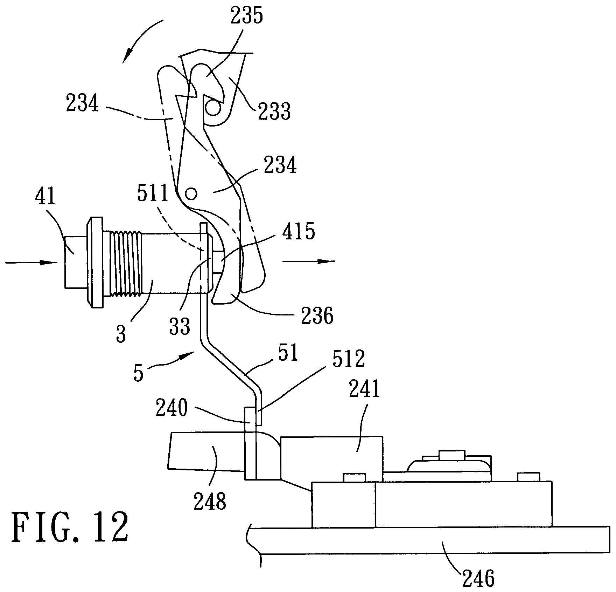

Referring to Figs. 9 to 12, the second embodiment of an anti-theft device according to this invention is shown to be similar to that of the first embodiment. The differences reside in that the second retained portion 233 in the form of a hooked block is disposed on the counter-shell 22, that the lock housing 3 is mounted on the shell 21, and that a hook lever 234 is further provided to be mounted on and turnable relative to the shell 21 about a pivot axis. The hook lever 234 has an actuated end 236 which is disposed to be engaged with and actuated by the spindle end 415, and a hook end 235 which is disposed to be turned about the pivot axis by the movement of the spindle end 415 between a hooking position (as indicated by solid line in Fig. 12), where the hook end 235 engages the second retained portion 233, and an unhooking position (as indicated by dotted line in Fig. 12), where the hook end 235 is disengaged from the second retained portion 233. Further, a mount seat 246 is mounted on the shell 21 such that the case releasably retaining member 241 is mounted on and movable relative to the mount seat 246 in the longitudinal direction and is actuated by a push block 248. The push block 248 has a retained lug 240 disposed to abut against the abutting segment 512 of the latch member 51 when the lock 41 is in the latched position so as to guard against the longitudinal movement of the releasably retaining member 241. Hence, when the abutting segment 512 is angularly displaced with the lock 41 to be disengaged from the retained lug 240, the push block 248 is permitted to move the case releasably retaining member 241 to be disengaged from the first retained portion 249, thereby allowing removal of the case 2 from the support 201. As illustrated, the anti-theft device according to this invention can be utilized in both kinds of the cases 2 of the first and second embodiments.

## Claims

1. An anti-theft case device for releasably locking to a first retained portion (243, 249) of a support (201) of a motorcycle, the device comprising a case (2) which includes a shell (21) and a counter-shell (22) hingedly connected to said shell (21) such that said case (2) is movable between open and closed positions, and a second retained portion (231, 233) secured to one of said shell (21) or said counter-shell (22), wherein said anti-theft case device further comprises:
a case releasably retaining member (241) mounted on said shell (21) and operable to displace in a longitudinal direction between a retaining position to retainingly engage the first retained portion (243, 249) so as to retain said case (2) on the support (201), and a releasing position to permit disengagement of said case releasably retaining member (241) from the first retained portion (243, 249) to allow said case (2) to be removed from the support (201);
a lock housing (3) including a tubular mount (311) mounted on one of said counter-shell (22) or said shell (21), a base wall (33) opposite to said tubular mount (311) in the longitudinal direction of the tubular mount (311), and having a periphery which surrounds a rotary axis (X) oriented in the longitudinal direction of the tubular mount (311), and a surrounding wall (31) extending from said periphery toward said tubular mount (311) to cooperate with said base wall (33) to define an accommodation chamber (32) therein, said base wall (33) having a penetrating hole (334) which extends there through along the rotary axis (X);
a key-operated lock (41) received in said tubular mount (311), and including a lock shaft (411) which extends into said accommodation chamber (32) to form a bolt region (413, 414), and which further extends outwardly of said penetrating hole (334) to terminate at a spindle end (415) that is disposed to be movable to actuate one of a movement of said case releasably retaining member (241) to the releasing position, and a movement of the case (2) to the open position, **characterised in that** said lock shaft (411) being configured to be turnable relative to said base wall (33) about the rotary axis (X) between a latched position, where said bolt region (413, 414) is guarded against a longitudinal movement thereof along the rotary axis (X) relative to said base wall (33), and an unlatched position, where said bolt region (413, 414) is set free to permit a longitudinal movement of said spindle end (415) from a non-actuating position to an actuating position, where said spindle end (415) is moved in the longitudinal direction relative to the base wall (33) to actuate a corresponding one of said movements to the releasing position and open position; and
a latch member (51) having
a latch segment (511) which extends radially relative to the rotary axis (X) into said accommodation chamber (32), which is disposed on said base wall (33), and which is angularly movable with said lock shaft (411) about the rotary axis (X), and
an abutting segment (512) which is opposite to said latch segment (511) in a lengthwise direction, and which is disposed to be abuttingly engaged with a corresponding one of said second retained portion (231) to maintain the closed position and said case releasably retaining member (241) to maintain the retaining position when said lock shaft (411) is in the latched position, such that the latch member (51) controls the other than the corresponding one of said movements to the releasing position and open position.

2. The anti-theft case device according to Claim 1, further **characterized by** a biasing member (42) disposed to bias said spindle end (415) toward the non-actuating position.

3. The anti-theft case device according to Claim 2, **characterized in that** said latch segment (511) has a spline hole (513) configured to be in spline engagement with said bolt region (413,414) so as to permit the longitudinal movement of said lock shaft (411) relative to said latch segment (511), and a plurality of grooves (514, 515, 516) angularly displaced from each other about the rotary axis (X), said base wall (33) having a ball (52) which is disposed to be engaged with a selected one of said grooves (514, 515, 516) to hold said latch segment (511) against movement relative to said base wall (33) when said lock shaft (411) is in a corresponding one of the latched and unlatched positions.

4. The anti-theft case device according to Claim 1, **characterized in that** said spindle end (415) is disposed to confront said case releasably retaining member (241) in the longitudinal direction such that, by pressing of said key-operated lock (41) when said lock shaft (411) is in the unlatched position, said spindle end (415) is moved to the actuating position to displace said case releasably retaining member (241) to the releasing position.

5. The anti-theft case device according to Claim 4, **characterized in that** said latch segment (511) is in spline engagement with said bolt region (413,414), and said abutting segment (512) extends radially from said latch segment (511) to abuttingly engage said second retained portion (231) so as to hold said case (2) in the closed position, and is angularly displaced with said bolt region (413,414) to disengage from said second retained portion (231) so as to allow movement of said case (2) to the open position.

6. The anti-theft case device according to Claim 1, further **characterized by** a hook lever (234) adapted to be mounted on and turnable relative to said shell (21) about a pivot axis, and having an actuated end (236) which is disposed to be engaged with and actuated by said spindle end (415), and a hook end (235) which is disposed to be turned about the pivot axis by the movement of said spindle end (415) between a hooking position, where said hook end (235) engages said second retained portion (233), and an unhooking position, where said hook end (235) is disengaged from said second retained portion (233).

7. The anti-theft case device according to Claim 6, **characterized in that** said latch segment (511) is in spline engagement with said bolt region (413,414), and said abutting segment (512) extends radially from said latch segment (511) to be coupled to said case releasably retaining member (241) and to be angularly displaced with said bolt region (413,414) to disengage from said case releasably retaining member (241) so as to allow movement of said case releasably retaining member (241) to the releasing position.

## Patentansprüche

1. Behältervorrichtung mit Diebstahlschutz zur lösbaren Verriegelung mit einem ersten Rückhalteteil (243, 249) eines Trägers (201) eines Motorrads, wobei die Vorrichtung folgendes aufweist:
ein Gehäuse (2) mit einer Schale (21) und einer Gegenschale (22), die mit der Schale (21) so gelenkig verbunden ist, daß das Gehäuse (2) zwischen offenen und geschlossenen Stellungen beweglich ist, und einen zweiten Rückhalteteil (231, 233), der an der Schale (21) oder der Gegenschale (22) befestigt ist, wobei die Behältervorrichtung mit Diebstahlschutz ferner folgendes umfaßt:
einen lösbaren Rückhalte-Gehäusekörper (241), der auf der Schale (21) gelagert und betätigbar ist, um in einer Längsrichtung zwischen einer Rückhalteposition zum zurückhaltenden Eingriff des ersten Rückhalteteils (243, 249) und dadurch zum Zurückhalten des Gehäuses (2) auf dem Träger (201), und
einer Freigabeposition verschoben zu werden, die ein Außereingriffkommen des lösbaren Rückhaltekörpers (241) des Gehäuses von dem ersten Rückhalteteil (243, 249) ermöglicht, so daß sich das Gehäuse (2) von dem Träger (201) weg bewegen kann;
des weiteren umfassend ein Verriegelungsgehäuse (3), das eine rohrförmige Halterung (311) aufweist, die auf der Gegenschale (22) oder der Schale (21) gelagert ist, und eine Basiswand (33), gegenüber der rohrförmigen Halterung (311) in Längsrichtung der rohrförmigen Halterung (311) mit einem Umfang, der eine Drehachse (X) umgibt, die in Längsrichtung der rohrförmigen Halterung (311) ausgerichtet ist, wobei sich eine umgebende Wand (31) vom Umfang in Richtung auf die rohrförmige Halterung (311) erstreckt, um mit der Basiswand (33) zur Bildung einer Aufnahmekammer (32) in ihr zusammenzuarbeiten, wobei die Basiswand (33) ein Eindringloch (334) aufweist, das sich entlang der Drehachse (X) durch sie hindurch erstreckt;
des weiteren umfassend eine schlüsselbetätigte Verriegelung (41), die in der besagten rohrförmigen Halterung (311) aufgenommen wird, und eine Verriegelungswelle (411) aufweist, die sich in die Aufnahmekammer (32) hinein erstreckt, um einen Bolzenbereich (413, 414) zu bilden, und die sich des weiteren aus dem eindringenden Loch (334) nach außen erstreckt, um ein Spindelende (415) zu begrenzen, das so angeordnet ist, daß es beweglich ist, um eine Bewegung des das Gehäuse lösbar zurückhaltenden Körpers (241) in die Freigabeposition zu betätigen, sowie eine Bewegung des Gehäuses (2) in die offene Position, **dadurch gekennzeichnet, daß**
die Verriegelungswelle (411) so gestaltet ist, daß sie in Bezug auf die Basiswand (33) um die Drehachse (X) drehbar ist, und zwar zwischen einer verriegelten Position, in der der Bolzenbereich (413, 414) gegen seine Längsbewegung entlang der Drehachse (X) in Bezug auf die Basiswand (33) geschützt ist, und einer entriegelten Position, in der der Bolzenbereich (413, 414) sich frei in einer Längsrichtung des Spindelendes (415) aus einer nicht wirkenden Stellung in eine wirkende Stellung bewegen kann, in der das Spindelende (415) in der Längsrichtung in Bezug auf die Basiswand (33) bewegt wird, um eine entsprechende der Bewegungen in die Freigabeposition und offene Position zu veranlassen, und des weiteren aufweisend
einen Verriegelungskörper (51) mit einem Verriegelungssegment (511), das sich in Bezug auf die Drehachse (X) in die Aufnahmekammer (32) in radialer Richtung hinein erstreckt, die auf der Basiswand (33) liegt und die mit der Verriegelungswelle (411) um die Drehachse (X) im Winkel beweglich ist,
und schließlich umfassend ein Anschlagsegment (512), das dem Verriegelungssegment (511) in einer Längsrichtung gegenüberliegt und so angeordnet ist, daß es an einen entsprechenden genannten zweiten Rückhalteteil (231) anschlägt, um die geschlossene Position aufrecht zu erhalten und
den das Gehäuse lösbar zurückhaltenden Körper (241) dazu zu bringen, in der Rückhalteposition zu bleiben, wenn die Verriegelungswelle (411) sich in der verriegelten Position befindet, und zwar derart, daß der Verriegelungskörper (51) die andere als die entsprechende Bewegung der Bewegungen in die Freigabeposition und offene Position steuert.

2. Behältervorrichtung mit Diebstahlschutz nach Anspruch 1, ferner **gekennzeichnet durch** einen Spannkörper (42), der so angeordnet ist, daß das Spindelende (415) gegen die Nichtantriebs-Position gespannt wird.

3. Behältervorrichtung mit Diebstahlschutz nach Anspruch 2, **dadurch gekennzeichnet, daß** das Verriegelungssegment (511) ein Keilloch (513) hat, das so gestaltet ist, daß im Bolzenbereich (413, 414) ein Keileingriff besteht, so daß die Längsbewegung der Verriegelungswelle (411) in Bezug auf das Verriegelungssegment (511) ermöglicht wird, daß ferner mehrere Nuten (514, 515, 516), die im Winkel versetzt zueinander um die Drehachse (X) vorhanden sind, und die Basiswand (33) eine Kugel (52) aufweist, die mit einer ausgewählten der Nuten (514, 515, 516) in Eingriff bringbar ist, um das Verriegelungssegment (511) gegen Bewegung in Bezug auf die Basiswand (33) festzuhalten, sobald die Verriegelungswelle (411) sich in einer entsprechenden Position der verriegelten und entriegelten Positionen befindet.

4. Behältervorrichtung mit Diebstahlschutz nach Anspruch 1, **dadurch gekennzeichnet, daß** das Spindelende (415) so angeordnet ist, daß es dem lösbaren Rückhaltekörper (241) des Gehäuse in Längsrichtung so gegenüberliegt, daß durch Drücken des schlüsselbetätigten Schlosses (41) dann, wenn die Verriegelungswelle (411) sich in der entriegelten Position befindet, das Spindelende (415) in die Antriebsposition bewegt wird, um den lösbaren Rückhaltekörper (241) des Gehäuses in die Entriegelungsposition zu verschieben.

5. Behältervorrichtung mit Diebstahlschutz nach Anspruch 4, **dadurch gekennzeichnet, daß** das Verriegelungssegment (511) sich mit dem Bolzenbereich (413, 414) in keilförmigem Eingriff befindet, und daß das Anschlagsegment (512) sich von dem Verriegelungssegment (511) aus in radialer Richtung erstreckt, um an den zweiten Rückhalteteil (231) anzustoßen und dann das Gehäuse (2) in der geschlossenen Position zu halten, und daß das Verriegelungssegment mit dem Bolzenbereich (413, 414) winklig verschoben ist, um dadurch außer Eingriff des zweiten Rückhalteteils (231) zu kommen und zu ermöglichen, daß sich das Gehäuse (2) in die offene Position bewegt.

6. Behältervorrichtung mit Diebstahlschutz nach Anspruch 1, ferner **gekennzeichnet durch** einen Hakenhebel (234), der auf der Wand (21) gelagert und in Bezug auf diese um eine Drehachse drehbar ist, und der ein betätigtes Ende (236) aufweist, das so angeordnet ist, daß es mit dem Spindelende (415) in Eingriff steht und dieses Spindelende angetrieben wird, und daß ein Hakenende (235), das um die Drehachse durch die Bewegung des Spindelendes (415) drehbar ist, und zwar zwischen einer Einhakposition, in das Hakenende (235) mit dem zweiten Rückhalteteil (233) in Eingriff steht, und einer Aushakungsposition, in der das Hakenende (235) mit dem zweiten Rückhalteteil (233) außer Eingriff steht.

7. Behältervorrichtung mit Diebstahlschutz nach Anspruch 6, **dadurch gekennzeichnet, daß** das Verriegelungssegment (511) mit dem Bolzenbereich (413, 414) in Keileingriff steht, und daß das Anschlagsegment (512) sich von dem Verriegelungssegment (511) in radialer Richtung erstreckt, um mit dem lösbaren Rückhaltekörper (241) des Gehäuses verbunden zu sein und mit dem Bolzenbereich (413, 414) winklig verschoben zu sein, und dadurch mit dem lösbaren Rückhaltekörper (241) des Gehäuses außer Eingriff zu stehen, so daß eine Bewegung des lösbaren Rückhaltekörpers (241) des Gehäuses in die Freigabeposition ermöglicht wird.

## Revendications

1. Dispositif antivol de coffre pour le verrouiller de façon libérable sur une première partie retenue (243, 249) d'un porte-bagage (201) d'un motocycle, le dispositif comprenant un coffre (2) qui inclut une coque (21) et une contre-coque (22) reliée par une charnière à ladite coque (21) de telle sorte que ledit coffre (2) est mobile entre des positions ouverte et fermée, et une deuxième partie retenue (231, 233) fixée soit sur ladite coque (21) soit sur ladite contre-coque (22),
dans lequel le dispositif antivol de coffre comprend en outre :
un élément de retenue libérable de coffre (241), monté sur ladite coque (21) et dont la fonction est de le déplacer dans une direction longitudinale entre une position de retenue pour engager de manière à la retenir la première partie retenue (243, 249) de telle sorte que ledit coffre (2) est retenu sur le porte-bagage (201), et une position de libération pour permettre le désengagement dudit élément de retenue libérable de coffre (241) depuis la première partie retenue (243, 249) pour permettre audit coffre (2) d'être enlevé du porte-bagage (201) ;
un boîtier de serrure (3) incluant une monture tubulaire (311) montée soit sur ladite contre-coque (22) soit sur ladite coque (21), une paroi de base (33) opposée à la monture tubulaire (311) dans la direction longitudinale de la monture tubulaire (311), et ayant une périphérie qui entoure un axe de rotation (X) orienté dans la direction longitudinale de la monture tubulaire (311), et une paroi périphérique (31) s'étendant depuis ladite périphérie vers ladite monture tubulaire (311) pour coopérer avec ladite paroi de base (33) pour définir une chambre de réception (32) dans celle-ci, ladite paroi de base (33) ayant un orifice de pénétration (334) qui s'étend à travers celle-ci le long de l'axe de rotation (X) ;
une serrure à clé (41) reçue dans ladite monture tubulaire (311) et incluant une tige de serrure (411) qui s'étend jusque dans ladite chambre de réception (32) pour former une zone de boulon (413, 414) et qui s'étend en outre vers l'extérieur dudit orifice de pénétration (334) pour se terminer sous forme d'extrémité de broche (415) qui est agencée pour être mobile pour actionner un mouvement dudit élément de retenue libérable de coffre (241) vers la position libérée soit un mouvement du coffre (2) vers la position ouverte,
**caractérisé en ce que** ladite tige de serrure (411) est configurée pour pouvoir tourner par rapport à ladite paroi de base (33) autour de l'axe de rotation (X) entre une position verrouillée dans laquelle ladite zone de boulon (413, 414) est protégée contre un mouvement longitudinal de celle-ci le long de l'axe rotatif (X) par rapport à ladite paroi de base (33), et une position non verrouillée dans laquelle ladite zone de boulon (413, 414) est libérée pour permettre un mouvement longitudinal de ladite extrémité de broche (415) depuis une position de non-actionnement vers une position d'actionnement dans laquelle ladite extrémité de broche (415) est déplacée dans la direction longitudinale par rapport à la paroi de base (33) pour actionner un desdits mouvements correspondants vers la position de libération et la position ouverte, et
un élément de verrouillage (51) ayant
un segment de verrouillage (511) qui s'étend radialement par rapport à l'axe de rotation (X) jusque dans la chambre de réception (32), qui est agencé sur ladite paroi de base (33) et qui est angulairement mobile avec ladite tige de serrure (411) autour de l'axe de rotation (X), et
un segment en butée (512) qui est opposé audit segment de verrouillage (511) dans une direction longitudinale, et qui est agencé pour être engagé en butée avec un des éléments correspondants parmi ladite deuxième partie retenue (231) pour maintenir la position fermée et ledit élément de retenue libérable de coffre (241) pour maintenir la position retenue lorsque ladite tige de serrure (411) est dans la position verrouillée, de telle sorte que l'élément de verrouillage (51) commande l'autre desdits mouvements correspondants vers la position de libération et la position ouverte.

2. Dispositif antivol de coffre selon la revendication 1, **caractérisé en outre par** un élément de sollicitation (42) agencé pour solliciter ladite extrémité de broche (415) vers la position de non-actionnement.

3. Dispositif antivol de coffre selon la revendication 2, **caractérisé en ce que** ledit segment de verrouillage (511) a un trou cannelé (513) configuré pour être en mis en prise de cannelure avec ladite zone de boulon (413, 414) de manière à permettre le mouvement longitudinal de ladite tige de serrure (411) par rapport audit segment de verrouillage (511), et une pluralité de rainures (514, 515, 516) angulairement déplacées les unes des autres autour de l'axe de rotation (X), ladite paroi de base (33) ayant une bille (52) qui est agencée pour être engagée avec une rainure sélectionnée parmi lesdites rainures (514, 515, 516) pour maintenir ledit segment de verrouillage (511) à l'encontre le mouvement par rapport à ladite paroi de base (33) lorsque ladite tige de serrure (411) est dans une des positions correspondantes parmi la position verrouillée et la position non verrouillée.

4. Dispositif antivol de coffre selon la revendication 1, **caractérisé en ce que** ladite extrémité de broche (415) est agencée pour faire face audit élément de retenue libérable de coffre (241) dans la direction longitudinale de telle sorte qu'en appuyant sur ladite serrure à clé (41) lorsque ladite tige de serrure (411) est dans la position non verrouillée, ladite extrémité de broche (415) est déplacée vers la position d'actionnement pour déplacer ledit élément de retenue libérable de coffre (241) vers la position libérée.

5. Dispositif antivol de coffre selon la revendication 4, **caractérisé en ce que** ledit segment de verrouillage (511) est en engagement cannelé avec ladite zone de boulon (413, 414) et ledit segment en butée (512) s'étend radialement depuis ledit segment de verrouillage (511) pour s'engager en butée dans la deuxième partie retenue (231) pour maintenir ledit coffre (2) dans la position fermée, et est angulairement déplacé avec ladite zone de boulon (413, 414) pour se désengager de la deuxième partie retenue (231) de manière à permettre un mouvement dudit coffre (2) vers la position ouverte.

6. Dispositif antivol de coffre selon la revendication 1, **caractérisé en outre par** un levier à crochet (234) adapté pour être monté sur ladite coque (21) et rotatif par rapport à celle-ci autour d'un axe de pivotement, et ayant une extrémité actionnée (236) qui est agencée pour être en engagement avec et être actionnée par ladite extrémité de broche (415), et une extrémité en crochet (235) qui est agencée pour tourner autour de l'axe de pivotement lors du mouvement de ladite extrémité de broche (415) entre une position d'accrochage dans laquelle ladite extrémité de crochet (235) s'engage dans la deuxième partie retenue (233) et une position de décrochage dans laquelle ladite extrémité en crochet (235) est désengagée de la deuxième partie retenue (233).

7. Dispositif antivol de coffre selon la revendication 6, **caractérisé en ce que** ledit segment de verrouillage (511) est en mis en prise de cannelure avec ladite zone de boulon (413, 414), et ledit segment en butée (512) s'étend radialement depuis ledit segment de verrouillage (511) pour être accouplé audit élément de retenue libérable de coffre (241) et pour être angulairement déplacé avec ladite zone de boulon (413, 414) pour se désengager dudit élément de retenue libérable de coffre (241) pour permettre un mouvement dudit élément de retenue libérable de coffre (241) vers la position de libération.
